# EUROPÄISCHE PATENTSCHRIFT

(11) **EP 0 521 028 B1**
(45) Veröffentlichungstag und Bekanntmachung des Hinweises auf die Patenterteilung: **05.06.1996**
(21) Anmeldenummer: 91905920.4
(22) Anmeldetag: 14.03.1991
(51) Int. Cl.: H04N 11/00

(54) **FARBFERNSEHÜBERTRAGUNGSSYSTEM**
TELEVISION TRANSMISSION SYSTEM
SYSTEME DE TRANSMISSION DE TELEVISION

(30) Priorität: 22.03.1990 DE 4009207
(43) Veröffentlichungstag der Anmeldung: 07.01.1993
(73) Patentinhaber: Deutsche Thomson-Brandt GmbH, D-78003 Villingen-Schwenningen (DE)
(72) Erfinder: RIEMANN, Uwe, D-3300 Braunschweig (DE); PLANTHOLT, Martin, D-6277 Bad Camberg 2 (DE)
(74) Vertreter: Hartnack, Wolfgang, Dipl.-Ing.
(86) Internationale Anmeldenummer: EP9100489
(87) Internationale Veröffentlichungsnummer: WO9115085

(56) Entgegenhaltungen:
- DE-C- 3 414 452
- DE-C- 3 840 054
- IEEE Transactions on Consumer Electronics, Band 34, Nr. 3, August 1988, IEEE, (New York, NY, US), S. Kageyama et al.: "An NTSC compatible wide screen television system with evolutionary extendibility", Seiten 460-467

## Beschreibung

Die Erfindung betrifft ein Farbfernsehübertragungssystem.

Die Einführung eines HDTV-Dienstes wird neben einer veränderten Zeilenzahl auch ein anderes Bildformat mit sich bringen, das dem Kinofilm eher angepaßt ist. Während die Spezifikationen für HDTV zur Zeit noch offen sind, ist ein Bildformat mit einem Bildseitenverhältnis von 16:9 (gegenüber dem heutigen 4:3-Format) bereits allgemein akzeptiert. In den USA sind Arbeiten bekannt geworden, die darauf abzielen, ein derartiges 16:9-Bildformat kompatibel zum NTSC-Standard zu übertragen. Zu diesem Thema wurde beispielsweise in der Fernseh- & Kinotechnik, 42. Jahrgang, Nr. 7/1988 ein Aufsatz von H. Weckenbrock, W. Wedam: "ACTV: Advanced Compatible Television - Vorschlag für eine neue, kompatible Breitbild-Fernsehnorm für die USA" veröffentlicht, der den Stand dieser Arbeiten wiedergibt.

Für ein PAL-System sind prinzipiell ähnliche Möglichkeiten wie bei ACTV gegeben, die 16:9-Randinformation einem weiteren Unterträger aufzumodulieren und kompatibel zur 4:3-Information zu übertragen. Dieser Unterträger muß dann jedoch eine andere spektrale Lage aufweisen als in einem NTSC-System, da 'freie Plätze' im PAL-Spektrum (sog. 'Fukinuki-holes', die durch entsprechende Filterung erzeugt werden müssen) genau an den Orten liegen, die im NTSC-System für die Farbübertragung (I, Q) belegt werden.

Versuche haben ergeben, daß die Zusatzinformation in ihrer Amplitude um ca. 20dB abgesenkt werden muß, um einen fast störungsfreien kompatiblen Empfang auf einem Standardempfänger zu gewährleisten. Hinzu kommt, daß bei ACTV die energiereichen unteren Frequenzen der Zusatzinformation in den Overscan-Bereich der Zeilen übertragen werden. Der Overscan-Bereich ist der Teil einer Zeile, der bedingt durch das Abtastraster und dessen Toleranzen nicht dargestellt wird. Dieser Bereich kann variieren, sodaß auf Standardempfängern im seitlichen Randbereich die übertragenen Zusatzinformationen sichtbar werden können.

In der DE-A-38 41 073 ist ein zum PAL-Standard kompatibles Übertragungssystem angegeben, welches bei Standardempfängern ein Bildformat von 4:3 und bei verbesserten Empfängern ein Bildformat von 16:9 liefert.

Auf der Senderseite wird die das größere Bildformat von 16:9 repräsentierende Zusatzinformation auf die im PAL-Signal übertragene Farbinformation U, V aufmoduliert. Es wird eine Modulationsart gewählt, durch die die Spektralräume der Farbinformationen U, V doppelt belegt werden. Dies kann z.3. durch Quadraturmodulation bewirkt werden. In einem Standardempfänger, der die Farbinformation U, V decodiert, werden somit die Zusatzinformationen wegen Fehlens eines entsprechenden Decoders unterdrückt. Ein verbesserter 16:9-Empfänger hingegen enthält entsprechende Decoder, die zusammen mit den Decodern für das Standardsignal ein Bildformat von 16:9 liefern.

In der spektralen Lage der Farbinformation werden jetzt noch zusätzliche Informationen übertragen. Dadurch kann in der Farbinformation systembedingt durch die Übertragung mit verkämmten Spektren Übersprechen auftreten. Diese Übersprechstörungen sind im konventionellen PAL-Verfahren als Cross-Colour- und Cross-Luminance-Störungen bekannt. Bei dem in der DE-A-38 41 073 und DE-A-39 26 388 beschriebenen Verfahren kann jetzt zusätzlich - abhängig von der Bildvorlage - Übersprechen in die Zusatzinformationen auftreten. Dies äußert sich auf dem verbesserten 16:9-Empfänger besonders störend, wenn die Zusatzinformation die 16:9-Randbereiche repräsentiert. Hier werden jetzt übersprechende Signalanteile der 4:3-Mitteninformation nach der Decodierung in den 16:9-Randbereichen wiedergegeben und erscheinen somit an einem anderen Ort auf dem Wiedergabeschirm als das das Übersprechen verursachende Ursprungssignal. Der Betrachter hat somit den Eindruck eines Geisterbildes.

Der Erfindung liegt die Aufgabe zugrunde, ein kompatibles Übertragungssystem anzugeben, welches Zusatzinformationen für einen 16:9-Empfänger überträgt und diese Zusatzinformationen auf dem 16:9-Empfänger ohne oder mit reduzierten Übersprechstörungen wiedergibt.

Diese Aufgabe wird durch die im Patentanspruch 1 angegebenen Merkmale gelöst. Vorteilhafte Weiterbildungen der Erfindung sind in den Unteransprüchen angegeben.

Auf der Sendeseite wird in die Verarbeitung der Zusatzinformation ein Verwürfelungsalgorithmus (Scrambling) eingeführt. Dieser Algorithmus wird im 16:9-Empfänger entsprechend rückgängig gemacht. Durch das Scrambling werden die Übersprechanteile auf die Zusatzinformationen stochastisch verteilt und führen somit nicht mehr zu bildähnlichen, strukturierten Störungen.

Nachfolgend wird die Erfindung anhand der Zeichnungen näher erläutert. Es zeigen:
- Fig. 1: 16:9-PAL-Coder
- Fig. 2: Zeitmultiplexpakete (Timeplex)
- Fig. 3: einen erfindungsgemäßen Decoder für PAL- und Zusatzinformationen
- Fig. 4: die relative Phasenbeziehung von PAL- und Zusatzinformationen

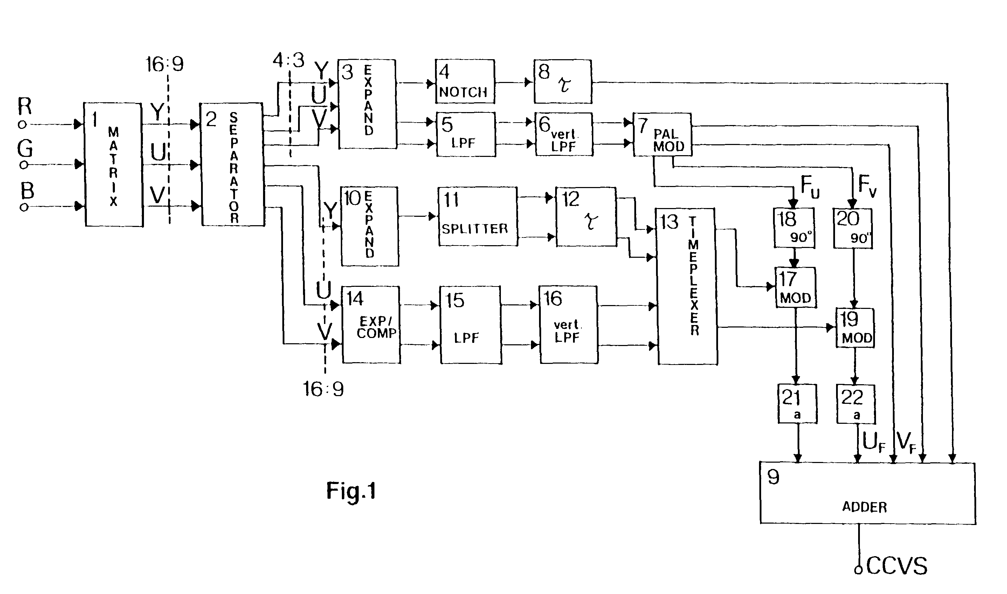

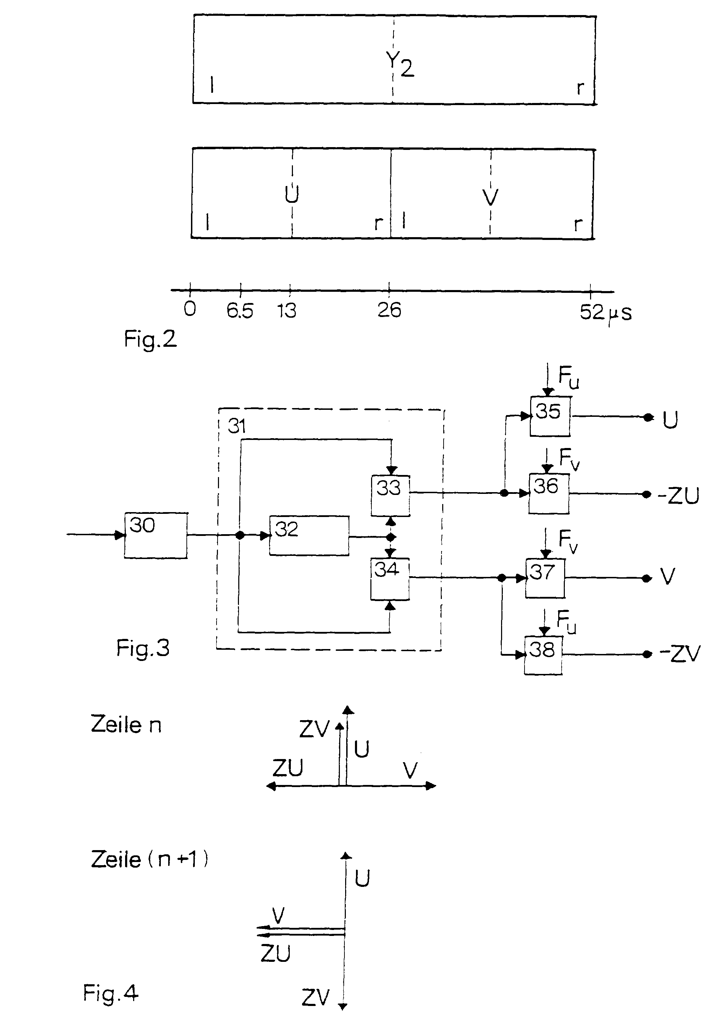

Fig. 1 zeigt einen 16:9-PAL-Coder zur Erzeugung eines kompatiblen FBAS-Signales, das 16:9-Zusatzinformationen beinhaltet, wie es in der P 38 41 073 für Fig. 3 beschrieben ist.

Fig. 2 zeigt ein Beispiel für die Bildung von Zeitmultiplexpaketen, wie es in der P 38 41 073 für Fig. 6 beschrieben ist.

Fig. 3 zeigt eine Anordnung von Bandpaß, Laufzeitdecoder und Demodulatoren, die gleichzeitig die Decodierung von konventionellen PAL-Signalen und Zusatzinformationen erlaubt.

Fig. 4 zeigt die relativen ?hasenlagen der trägerfrequenten PAL-Farbinformationen U, V und der Zusatzinformationen ZU, ZV für zwei aufeinanderfolgende Zeilen.

Der 16:9-PAL-Coder nach Fig. 1 (aus DE-A-38 41 073, Fig. 3) beinhaltet einen Timeplexer 13, der die Luminanz- und Chrominanzsignalanteile zu Zeitmultiplexpaketen zusammenfaßt. Dies ist für ein Beispiel aus der P 38 41 073 in Fig. 2 dargestellt. Hierbei werden Luminanz- und Chrominanzanteile der 16:9-Randbereiche zeitexpandiert und nehmen in der in Fig. 2 gezeigten Weise die Zeitdauer einer aktiven Zeile ein. Die Signalanteile des linken Randbereiches sind mit 1 markiert; die des rechten Randbereiches mit r.
Durch die Zuordnung von Signalanteilen zur zeilenweisen Abtastung, wie in Fig. 2 dargestellt, kann es beispielsweise zu Übersprechen von Informationen der linken Bildhälfte der kompatiblen 4:3-Übertragung in die Luminanz des linken 16:9-Randbereiches kommen. Das Übersprechen wird dann im 16:9-Empfänger auch im linken Randbereich dargestellt und es erscheint eine Art Geisterbild.

Dies läßt sich vermeiden, wenn der Timeplexer 13 die Zeitmultiplexpakete nach einem Verwürfelungsalgorithmus bildet. Die Verwürfelung erfolgt in horizontaler Richtung, d.h. entlang einer Zeile und wiederholt sich zeilenweise. Dadurch wird sichergestellt, daß die Verwürfelung nicht auf unterschiedliche Phasenlagen des modulierten Trägers einwirkt. Es ergibt sich somit eine Entzerrung in der Übersprechstruktur.

Vorteilhaft kann sich der Verwürfelungsalgorithmus von Halbbild zu Halbbild oder von Vollbild zu Vollbild ändern. Ein entsprechendes Signal zur Synchronisation der Entwürfelung im Empfänger kann z.B. in der vertikalen Austastlücke übertragen werden. Die Kompatibilität zum 4:3-Empfang sowie die Signaltrennung durch Laufzeitglieder im Empfänger bleiben erhaiten.

Eine solche Verwürfelung bei der Codierung und Decodierung für 16:9-Fernsehsignale kann vorteilhaft auch auf andere Zusatzinformationen, wie sie beispielsweise in der DE-A-3926388 beschrieben sind, angewendet werden.

Die im Coder eingeführte Verwürfelung wird im 16:9-Empfänger rückgängig gemacht. Dies geschieht im Demultiplexer (Demultipiexer 35 in DE-A-38 41 073), der die im Zeitmultiplex verschachtelten Luminanz- und Chrominanzsignale separiert.

Vorteilhaft lassen sich Funktions-Blöcke zur Decodierung der PAL-codierten 4:3-Mitteninformation und der Zusatzinformation für den 16:9-Empfänger zusammenfassen. Bezeichnet man die Farbträger mit ihren entsprechenden Phasenlagen zur konventionellen PAL-Codierung mit Fu und Fv, sowie die damit modulierten Farbinformationen mit U und V und weiterhin die mit dem jeweils um 90 Grad in der Phase gedrehten, auf die Fu- und Fv-trägermodulierten Zusatzinformationen als ZU und ZV, dann läßt sich die in Fig. 3 dargestellte Blockstruktur zur Decodierung von konventionell PAL-codierter 4:3-Mitteninformation und 16:9-Zusatzinformation angeben.

Das an den Empfänger gelieferte FBAS-Signal durchläuft ein Bandpaßfilter 30 und wird dann zur Signalaufspaltung einem Laufzeitdecoder 31 zugeführt. Der Laufzeitdecoder beinhaltet ein PAL-Laufzeitglied 32 sowie eine Additionsstufe 33 und eine Subtraktionsstufe 34. Am Ausgang der Additionsstufe 33 erhält man die Signale U und ZU in Trägerfrequenzlage sowie entsprechend am Ausgang der Subtraktionsstufe die trägerfrequenten Signale V und ZV.

Durch die 90 Grad Phasendrehung der Träger Fu und Fv zur Modulation der Zusatzinformation sowie durch die zeilenalternierende Vorzeichenumkehr des Trägers Fv im PAL-System ergeben sich folgende Zusammenhänge:

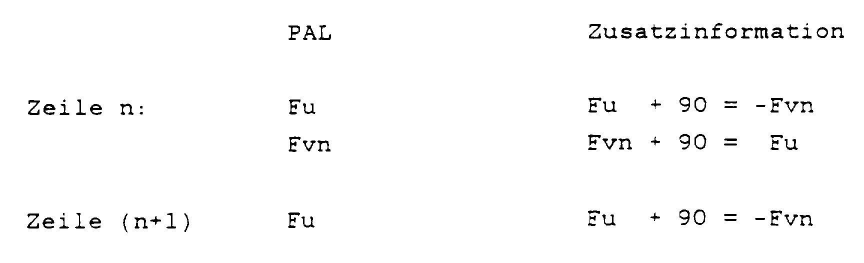

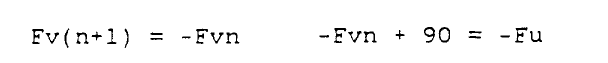

Somit läßt sich die Demodulation der PAL- und auch der Zusatzinformation mit den konventionellen PAL-Trägern bewirken. Die Demodulatoren 35 - 38 werden mit den vom PAL-System bekannten Trägern Fu, Fv betrieben. Für die Demodulation der Zusatzinformationen ZU, ZV ist dann jeweils noch eine Vorzeichenumkehrung zu beachten. Diese kann gegebenenfalls in einem Verstärker rückgängig gemacht werden, der vorteilhaft gleichzeitig die zur Verbesserung der Kompatibilität senderseitig eingeführte Amplitudenabsenkung wieder ausgleicht (vgl. Verstärker 31, 32 in Fig. 9 in DE-A-38 41 073).

In Fig. 4 sind die relativen Phasenlagen der U, V- und ZU, ZV- Informationen in der trägerfrequenten Lage dargestellt.

## Patentansprüche

1. Farbfernsehübertragungssystem zur Übertragung und zum Empfang von standardisierten PAL-Fernsehsignalen, insbesondere mit einem ersten Bildformat von 4:3, mit dem Standard-Fernsehsignal zugesetzten, verwürfelten Zusatzinformationen (ZU, ZV), die insbesondere eine Information (Fig. 2) über ein zweites Bildformat von 16:9 enthalten können, die mit einem die Zusatzinformationen decodierenden Empfänger empfangbar sind, **dadurch gekennzeichnet,** daß
- ein sendeseitiger Modulator die Zusatzinformationen (ZU, ZV) auf den Farbträger derart aufmoduliert, daß Spektralräume der Farbinformation (U, V) doppelt belegt werden (Fig. 4);
- die Zusatzinformationen (ZU, ZV) vor der Modulation auf den Farbträger in einem Multiplexer (13) verwürfelt und im Empfänger nach der Demodulation durch einen Demultiplexer entsprechend entwürfelt werden;
- sich der Algorithmus der Verwürfelung halbbild- oder vollbildweise ändert, wobei ein Signal zur Synchronisation der Entwürfelung im Empfänger mitübertragen wird und/oder
ein PAL-Laufzeitdecoder (31) oder Teile dieses Decoders für die Demodulation des Standard-PAL-Signals und für die Demodulation der Zusatzinformationen (ZU, ZV) verwendet wird bzw. werden.

2. Farbfernsehübertragungssystem nach Anspruch 1, **dadurch gekennzeichnet,** daß die Verwürfelung im seriellen Signalfluß des Fernsehsignals durchgeführt wird.

3. Farbfernsehübertragungssystem nach Anspruch 2, **dadurch gekennzeichnet,** daß die Verwürfelung innerhalb von Zeilen des Fernsehsignals durchgeführt wird.

4. Farbfernsehübertragungssystem nach Anspruch 1, **dadurch gekennzeichnet,** daß die Teile des PAL-Laufzeitdecoders (31) ein PAL-Laufzeitglied (32) und/oder eine Additionsstufe (33) und/oder eine Subtraktionsstufe (34) sind.

5. Farbfernsehübertragungssystem nach einem oder mehreren der Ansprüche 1 bis 4, **dadurch gekennzeichnet,** daß die Zusatzinformationen (ZU, ZV) mit Hilfe der bekannten PAL-Farbträger (Fu, Fv) demoduliert werden.

6. Farbfernsehübertragungssystem nach Anspruch 5, **dadurch gekennzeichnet,** daß decoderseitig die Beträge der Zusatzinformationen (ZU, ZV) mit Hilfe von invertierenden Verstärkern, die eine senderseitige Amplitudenabsenkung der Zusatzinformationen im Empfänger ausgleichen, invertiert werden.

## Claims

1. Television transmission system for transmitting and for receiving standardized PAL television signals, particularly with a first picture format of 4:3, with scrambled additional information (ZU, ZV) added to the standard television signal, which additional information may particularly contain an item of information (Fig.2) concerning a second picture format of 16:9, which can be received using a receiver decoding the additional information, characterised in that a modulator at the transmitter modulates the additional information (ZU, ZV) on to the color subcarrier in such a manner that spectral spaces of the color information (U, V) are doubly occupied (Fig.4); - the additional information (ZU, ZV) is scrambled prior to being modulated on to the color subcarrier in a multiplexer (18) and descrambled accordingly in the receiver after demodulation by means of a demultiplexer; - the algorithm for the scrambling changes fieldwise or frame-wise, whereby a signal for synchronizing the descrambling in the receiver is also transmitted and/or a PAL run time decoder (31) or parts of said decoder is or, respectively, are used for the demodulation of the standard PAL signal and for the demodulation of the additional information (ZU, ZV).

2. Television transmission system according to claim 1, characterised in that the scrambling is carried out in the serial data flow of the television signal.

3. Television transmission system according to claim 2, characterised in that the scrambling is carried out within lines of the television signal.

4. Television transmission system according to claim 1, characterised in that the parts of said PAL run time decoder (31) are a PAL delay element (32) and/or an adding stage (33) and/or a subtracting stage (34).

5. Television transmission system according to one or several of claims I to 4, characterised in that the additional information (ZU, ZV) is demodulated by means of the known PAL color subcarriers (Fu. Fv).

6. Television transmission system according to claim 5, characterised in that on the decoder-side the values of the additional information (ZU, ZV) are inverted by means of inverting amplifiers which compensate a transmitter-side amplitude reduction of the additional information in the receiver.

## Revendications

1. Système de transmission TV couleur permettant de transmettre et recevoir des signaux vidéo PAL standard, notamment avec un premier format d'image de 4/3, et avec des informations additionnelles embrouillées(ZU, ZV) associées au signal vidéo standard et incluant notamment une information (fig. 2) concernant un second format d'image de 16/9, qui peuvent être reçues au moyen d'un récepteur décodant lesdites informations additionnelles, système **caractérisé en ce qui suit** :
- les informations additionnelles (ZU, ZV) sont modulées sur la sous-porteuse de chrominance par l'intermédiaire d'un modulateur prévu côté émetteur, de telle manière que les espaces spectraux de l'information de chrominance (U, V) soient occupés en double (fig. 4) ;
- avant leur modulation sur la sous-porteuse de chrominance, lesdites informations additionnelles (ZU, ZV) sont embrouillées dans un multiplexeur 13), puis désembrouillées à l'aide d'un démultiplexeur, après leur démodulation dans le récepteur ;
- l'algorithme de l'embrouillage varie trame par trame ou image par image, un signal pour la synchronisation du désembrouillage dans le récepteur étant transmis simultanément, et/ou
un décodeur de retard PAL (31) ou certains éléments dudit décodeur est (sont) utilisé(s) pour la démodulation du signal PAL standard et pour la démodulation des informations additionnelles (ZU, ZV).

2. Système de transmission TV couleur selon la revendication 1 **caractérisé en ce** que l'embrouillage est réalisé dans le flux sériel du signal vidéo.

3. Système de transmission TV couleur selon la revendication 2 **caractérisé en ce** que l'embrouillage est effectué à l'intérieur des lignes du signal vidéo.

4. Système de transmission TV couleur selon la revendication 1 **caractérisé en ce** que lesdits éléments du décodeur de retard PAL (31) sont un circuit à retard PAL (32) et/ou un étage additionneur (33) et/ou un étage soustracteur (34).

5. Système de transmission TV couleur selon l'une ou plusieurs des revendications 1 à 4 **caractérisé en ce** que lesdites informations additionnelles (ZU, ZV) sont démodulées à l'aide de sous-porteuses de chrominance PAL (Fu, Fv) connues.

6. Système de transmission TV couleur selon la revendication 5 **caractérisé en ce** que, côté décodeur, les montants des informations additionnelles (ZU, ZV) sont inversés au moyen d'amplificateurs invertissants qui compensent une baisse d'amplitude, introduite au niveau de l'émetteur, des informations additionnelles dans le récepteur.
